# EUROPEAN PATENT APPLICATION

(11) **EP 2 343 492 A1**
(43) Date of publication of application: **13.07.2011**
(21) Application number: 10169442.0
(22) Date of filing: 13.07.2010
(51) Int. Cl.: G01B 3/10

(54) **Tape with photographing and video recording functions**

(30) Priority: 24.12.2009 CN 200910156949
(71) Applicant: Ningbo Jufeng Tools Industrial Co., Ltd., Yuyao City Zhejiang (CN)
(72) Inventor: Zhang, Linghui, Yuyao City Zhejiang (CN); Huang, Zhonghua, Yuyao City Zhejiang (CN)
(74) Representative: Lermer, Christoph

(57) **Abstract**

This invention relates to a tape, particularly to a tape with photographing and video recording functions. The tape comprises a tape casing (1), a tape core (2) and a tape belt (3), the end of the tape belt (3) is protruding from an opening of the tape (4). A video recording and photographing head (5) is disposed at the opening of the tape (4) on the tape casing(1), a storage card (6) is provided in the tape casing (1), a photographing switch (7) and a video recording switch (8) are connected to the storage card (6) via circuits and protruding to the outside of the tape casing (1), the photographing switch (7) and the video recording switch (8) are further connected to the video recording and photographing head (5) via circuits, a power supply (9) is provided in the tape casing (1), the storage card (6), the photographing switch (7) and the video recording switch (8) are connected to the power supply (9) via power lines (10), and the storage card (6) is connected to a data interface (12) via wires (11). A display screen (13) is disposed on the top of the tape casing (1), and the display screen (13) is connected to the storage card (6) via circuits. A video recording and photographing head (5) is provided on the tape, therefore, in some cases, e.g. when realtime measuring results in field are needed during police work, field-measuring cases and field-measuring data are totally and really recorded in realtime by the video recording and photographing head (5), thereby providing sufficient evidence material for police work.

## Description

### FIELD OF THE INVENTION

This invention relates to a tape, in particular, to a tape with photographing and video recording functions.

### BACKGROUND OF THE INVENTION

Existing tapes only have the single measuring function, therefore, in some cases, e.g. when realtime measuring results in field are needed during police work, nothing can be done using the existing tapes.

### SUMMARY OF THE INVENTION

The object of the invention is to overcome the defect that the existing tapes only have the single function, and provides a tape with photographing and video recording functions. When a tape belt is pulled out to measure the size of an object, realtime measuring results in field can be recorded by a video recording head and a still camera, the resulting data are stored in a memory card of the tape, and the data will be transmitted to a computer by the memory card of the tape.

The object of the invention is achieved by the following means. The tape with photographing and video recording functions comprises a tape casing, a tape core and a tape belt, the end of the tape belt protruding from an opening of the tape, is characterized in that: a video recording and photographing head is disposed at the opening of the tape on the tape casing, a storage card is provided in the tape casing, a photographing switch and a video recording switch are connected to the storage card via circuits and protruding to the outside of the tape casing, the photographing switch and the video recording switch are further connected to the video recording and photographing head via circuits, a power supply is provided in the tape casing, the storage card, the photographing switch and the video recording switch are connected to the power supply via power lines, and the storage card is connected to a data interface via wires.

A display screen is disposed on the top of the tape casing, and the display screen is connected to the storage card via circuits.

Advantageous effects of this invention are as following. A video recording and photographing head is provided on the tape, therefore, in some cases, e.g. when realtime measuring results in field are needed during police work, field-measuring cases and field-measuring data are totally and really recorded in realtime by the video recording and photographing head, thereby providing sufficient evidence material for police work.

### BRIEF DESCRIPTION OF THE DRAWINGS

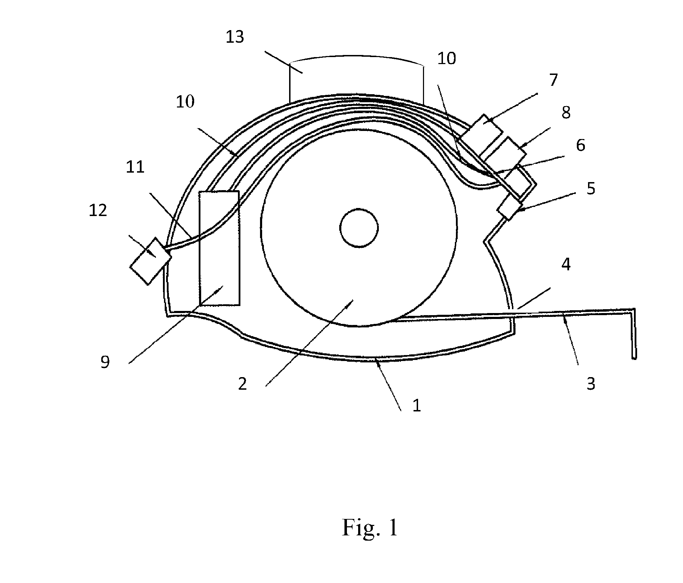

Fig.1 is a schematic diagram showing the structure of this invention.

In the figures:

### DETAILED DESCRIPTION OF THE INVENTION

As shown in Fig.1, the tape with photographing and video recording functions comprises a tape casing 1, a tape core 2 and a tape belt 3, the end of the tape belt 3 protruding from an opening 4 of the tape, characterized in that: a video recording and photographing head 5 is disposed at the opening 4 of the tape on the tape casing 1, a storage card 6 is provided in the tape casing 1, a photographing switch 7 and a video recording switch 8 are connected to the storage card 6 via circuits and protruding to the outside of the tape casing1, the photographing switch 7 and the video recording switch 8 are further connected to the video recording and photographing head 5 via circuits, a power supply 9 is provided in the tape casing 1, the storage card 6, the photographing switch 7 and the video recording switch 8 are connected to the power supply 9 via power lines, and the storage card 6 is connected to a data interface 12 via wires 11.

A display screen 13 is disposed on the top of the tape casing 1, and the display screen 13 is connected to the storage card 6 via circuits.

This invention can be used for photographing, and also for video recording. When the photographing switch is switched on, the photographing can be performed, and when the video recording switch is switched on, the video recording can be performed. This invention is particularly suitable for some special works such as police work.
1 tape casing,
2 tape core,
3 tape belt
4 opening of the tape,
5 video recording and photographing head
6 storage card
7 photographing switch
8 video recording switch
9 power supply
10 power line
11 wire
12 data interface
13 display screen

## Claims

1. A tape with photographing and video recording functions comprises a tape casing (1), a tape core (2) and a tape belt (3), the end of the tape belt (3) protruding from an opening of the tape (4), **characterized in that**: a video recording and photographing head (5) is disposed on the tape, a storage card (6) is provided in the tape casing (1), a photographing switch (7) and a video recording switch (8) are connected to the storage card (6) via circuits and protruding to the outside of the tape casing (1), the photographing switch (7) and the video recording switch (8) are further connected to the video recording and photographing head (5) via circuits, a power supply (9) is provided in the tape casing (1), the storage card (6), the photographing switch (7) and the video recording switch (8) are connected to the power supply (9) via power lines (10), and the storage card (6) is connected to a data interface (12) via wires (11).

2. The tape with photographing and video recording functions of claim 1, **characterized in that**: a display screen (13) is disposed on the top of the tape casing (1), and the display screen (13) is connected to the storage card (6) via circuits.
